# EUROPEAN PATENT APPLICATION

(11) **EP 3 067 235 A2**
(43) Date of publication of application: **14.09.2016**
(21) Application number: 16159443.7
(22) Date of filing: 09.03.2016
(51) Int. Cl.: B60Q 1/00, B62J 6/00, B62J 6/02, B60Q 1/34, B60Q 1/28, F21S 8/10, F21V 17/00, F21V 19/00, F21Y 113/10, F21Y 115/10

(54) **VEHICLE LIGHTING DEVICE**

(30) Priority: 11.03.2015 JP 2015048072
(71) Applicant: HONDA MOTOR CO., LTD., Tokyo, 107-8556 (JP)
(72) Inventor: TAKENAKA, Nobuyuki, SAITAMA, 351-0193 (JP); NAMAI, Masashi, SAITAMA, 351-0193 (JP)
(74) Representative: Augarde, Eric

(57) **Abstract**

To provide a vehicle lighting device that can make each lighting device more recognizable.

A turn signal device 35 is provided in a left and right pair, and is attached such that an outer lens 64 extends obliquely upward to the outer side from the vehicle center side in front view; and in front view, a turn signal bulb 62 is attached to an outer position in the vehicle width direction of a base member 61, while a light-emitting part of a position lamp 63 includes a first light-emitting portion 63a extending along the upper edge of the outer lens 64 from the vehicle center side, and a second light-emitting portion 63b extending along the lower edge of the outer lens 64 from the vehicle center side.

## Description

### Technical Field

The present invention relates to a vehicle lighting device including both of turn signal lamps and position lamps.

### Background of the Invention

Conventionally, a motorcycle including position lamps and turn signals in a front part of the vehicle has been known (see Patent Document 1, for example).

Patent Document 1 - Japanese Patent Application Publication No. 2012-243452

In Patent Document 1, the layout of a lighting device is determined more freely, since light from the light source of position lamps is delivered to the outside through a light guiding member, which is provided along a lower side of the lighting device.

### Summary of the Invention

### Problem to Be Solved by the Invention

The front position lamps have a function of making the vehicle more recognizable to front and side vehicles. Additionally, the turn signals provided in the front part of the vehicle also need to be recognizable from front and both sides of the vehicle. The requirement is the same with a vehicle in which these two lighting devices are provided inside a single housing.

Against this background, the present invention aims to provide a vehicle lighting device that can make each lighting device more recognizable.

### Means for Solving Problem

To solve the above problem, the present invention is a vehicle lighting device including: a turn signal lamp-light source (62) provided in a turn signal lamp (68); a position lamp-light source (97) provided in a position lamp (63); a base member (61) to which the turn signal lamp-light source (62) and the position lamp-light source (97) are attached; and a lens (64) covering the turn signal lamp-light source (62) and the position lamp-light source (97), characterized in that: the vehicle lighting device is provided in a left and right pair, and is attached such that the lens (64) extends obliquely upward to the outer side from the vehicle center side in front view; and in front view, the turn signal lamp-light source (62) is attached to an outer position in the vehicle width direction of the base member (61), while a light-emitting part of the position lamp (63) includes a first light-emitting portion (63a) extending along the upper edge of the lens (64) from the vehicle center side, and a second light-emitting portion (63b) extending along the lower edge of the lens (64) from the vehicle center side.

In the above configuration, the base member (61) may include a top portion (61b) formed along the first light-emitting portion (63a), so as to cover the first light-emitting portion (63a) from the outer side in the vehicle width direction.

Also in the above configuration, an outer end portion in the vehicle width direction (63c) of the second light-emitting portion (63b) may be curved toward the first light-emitting portion (63a) side.

Also in the above configuration, the turn signal lamp-light source (62) may be a bulb, and the position lamp-light source (97) may be an LED.

### Effect of the Invention

The vehicle lighting device of the present invention is: provided in a left and right pair, and is attached such that the lens extends obliquely upward to the outer side from the vehicle center side in front view; and in front view, the turn signal lamp-light source is attached to an outer position in the vehicle width direction of the base member, while a light-emitting part of the position lamp includes a first light-emitting portion extending along the upper edge of the lens from the vehicle center side, and a second light-emitting portion extending along the lower edge of the lens from the vehicle center side. Hence, the turn signal lamp-light source is attached to the outer position in the vehicle width direction of the base member, whereby the turn signal lamp can be made more recognizable not only from the front but also from the side. In addition, the light-emitting part of the position lamp can be widened by the first light-emitting portion and the second light-emitting portion, and therefore the position lamp can be made more recognizable.

Also, the base member includes the top portion formed along the first light-emitting portion, so as to cover the first light-emitting portion from the outer side in the vehicle width direction. Hence, light from the first light-emitting portion of the position lamp is shielded in side view, and therefore light emitted from the turn signal is made more recognizable.

Also, the outer end portion of the second light-emitting portion in the vehicle width direction is curved toward the first light-emitting portion side. Hence, the curved portion makes it easier to check the attachment direction of the second light-emitting portion, whereby assembly work is made easier, and misassembly of the left and right lighting devices can be prevented.

Also, the turn signal lamp-light source is a bulb, and the position lamp-light source is an LED. Hence, the bulb requiring maintenance is arranged in an outer position in the vehicle width direction of the base member, so that maintainability can be improved.

### Brief Description of the Drawings

FIG. 1 is a left side view of a front part of a motorcycle, which includes turn signal devices according to the present invention.
FIG. 2 is a front view of the motorcycle.
FIG. 3 is a plan view of the front part of the motorcycle.
FIG. 4 is a front view of the left and right turn signal devices.
FIG. 5 is a side view of the turn signal device.
FIG. 6 is a plan view of the left and right turn signal devices.
FIG. 7 is a cross-sectional view taken along line VII-VII of FIG. 4.
FIG. 8 is a front view of the left and right turn signal devices showing a state where outer lenses are detached from FIG. 4.
FIG. 9 is a front view of the left and right turn signal devices showing a state where inner lenses are detached from FIG. 8.
FIG. 10 is a cross-sectional view taken along line X-X of FIG. 5.

### Best Mode for Carrying Out the Invention

Hereinafter, an embodiment of the present invention will be described with reference to the drawings. Note that in the drawings, directions such as front and rear, left and right, and upper and lower are described as being the same as those relative to the vehicle body, if not stated otherwise. Additionally, reference numeral FR indicates the front of the vehicle body, reference numeral UP indicates the upper direction of the vehicle body, and reference numeral LH indicates the left of the vehicle body in the drawings.

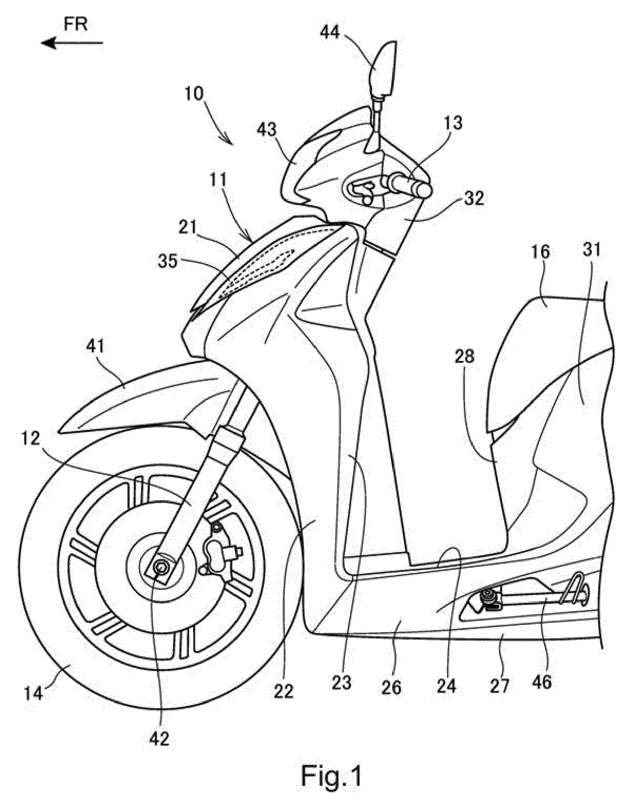

FIG. 1 is a left side view of a front part of a motorcycle 10, which includes turn signal devices 35 according to the present invention.

The motorcycle 10 is a scooter type vehicle, in which a body frame as the framework is covered with a body cover 11, a front fork 12 is steerably supported to a front part of the body frame, a bar handle 13 is supported to an upper end part of the front fork 12, and a front wheel 14 is supported to a lower end part of the front fork.

A seat 16 is arranged above a rear part of the body frame, a unit swing type engine is swingably supported to a rear lower part of the body frame, and a rear wheel is supported to a rear end part of the engine.

The body cover 11 includes a front cover 21, paired left and right front side covers 22, a leg shield 23, a floor step 24, paired left and right under side covers 26, under covers 27, a center cover 28, a body cover 31, and a handle cover 32.

The front cover 21 covers an upper part of the front fork 12 from the front. The front side covers 22 extend rearward from both side parts of the front cover 21. The leg shield 23 is connected to the left and right front side covers 22, and covers the leg part of the rider from the front. The floor step 24 extends rearward from the lower edge of the leg shield 23, and forms a flat part on which the rider places his/her feet. The under side covers 26 extend downward from both side edges of the floor step 24. The under covers 27 are connected to the lower edges of the left and right under side covers 26, and cover a lower part of the vehicle body. The center cover 28 is arranged below a front part of the seat 16, and is connected to the rear edge of the floor step 24. The body cover 31 extends rearward along both side edges of the seat 16, from the rear edge of the center cover 28. The handle cover 32 covers a center part of the bar handle 13.

The paired left and right turn signal devices 35 are arranged on both sides of the front cover 21. The turn signal device 35 is a lighting device in which a position lamp (also referred to as a small lamp) for notifying other traffic of the width of the vehicle, is provided integrally with a turn signal lamp (also referred to as a turn signal or a direction indicator) for notifying other traffic of change in the traveling direction when turning right or left.

In FIG. 1, reference numeral 41 indicates a front fender covering the front wheel 14 from above, reference numeral 42 indicates an axle provided in a lower end part of the front fork 12 to support the front wheel 14, reference numeral 43 indicates a head light arranged in a front part of the handle cover 32, reference numeral 44 indicates paired left and right rear-view mirrors, and reference numeral 46 indicates a side stand swingably supported to the body frame below the floor step 24.

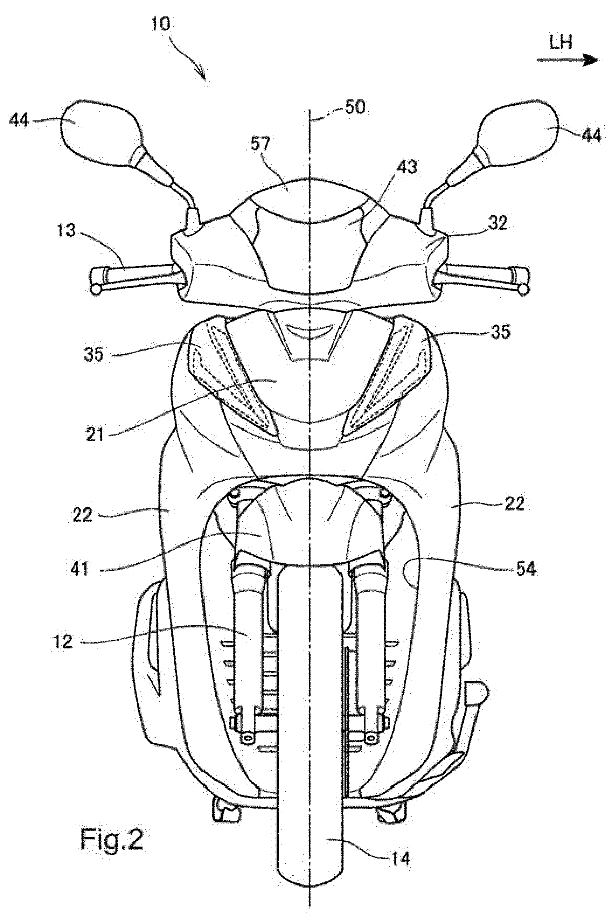

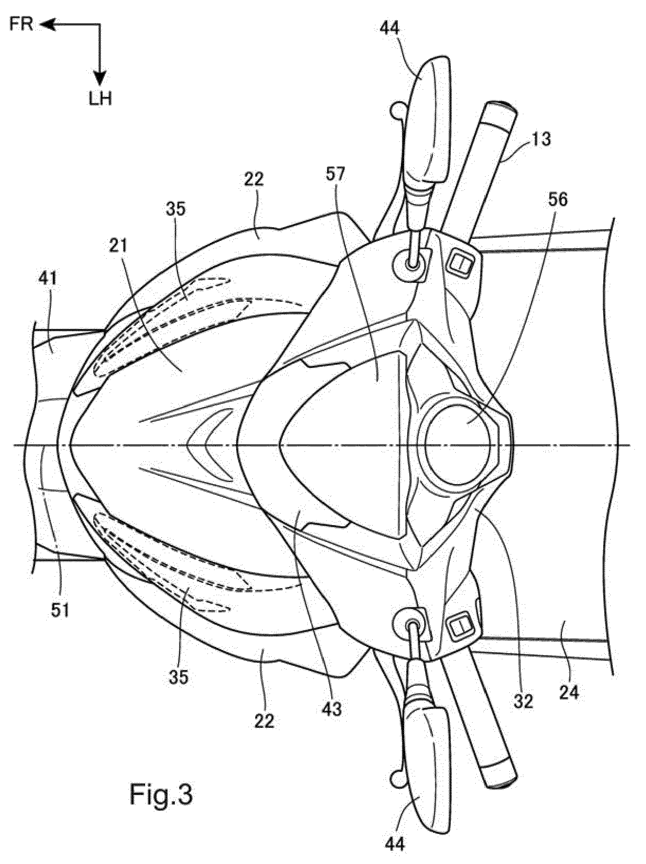

FIG. 2 is a front view of the motorcycle 10, and FIG. 3 is a plan view of the front part of the motorcycle 10.

As shown in FIGS. 2 and 3, the paired left and right turn signal devices 35, 35 are arranged so as to be sandwiched by the front cover 21 and the left and right front side covers 22, 22.

The left and right turn signal devices 35, 35 are symmetrical with respect to a vertical vehicle centerline 50 extending vertically at the center in the vehicle width direction in front view of FIG. 2, and symmetrical with respect to a horizontal vehicle centerline 51 extending longitudinally at the center of the vehicle width in plan view of FIG. 3. Each turn signal device 35 is a large lighting device which, in front view, extends obliquely upward to the outer side from the vicinity of the vertical vehicle centerline 50, and in plan view, extends obliquely rearward to the outer side from the vicinity of the horizontal vehicle centerline 51 while curving so as to protrude outward.

In FIG. 2, the front cover 21 and left and right front side covers 22, 22 form an opening portion 54 in a front part of the body cover 11, while a lower part of the front fork 12 and a front part of the front fender 41 protrude frontward from the opening portion 54.

The turn signal device 35 has a sharp lower end, and is flared toward the upper part from the lower end. The distance between lower ends of the left and right turn signal devices 35, 35 is substantially the same as the width of the front wheel 14. The outermost ends in the vehicle width direction of the turn signal device 35 are positioned outside the outermost ends in the vehicle width direction of the opening portion 54, and on the inner side in the vehicle width direction of both end portions in the vehicle width direction of the handle cover 32. Since the turn signal device 35 is thus large and has a large surface area, it is more recognizable.

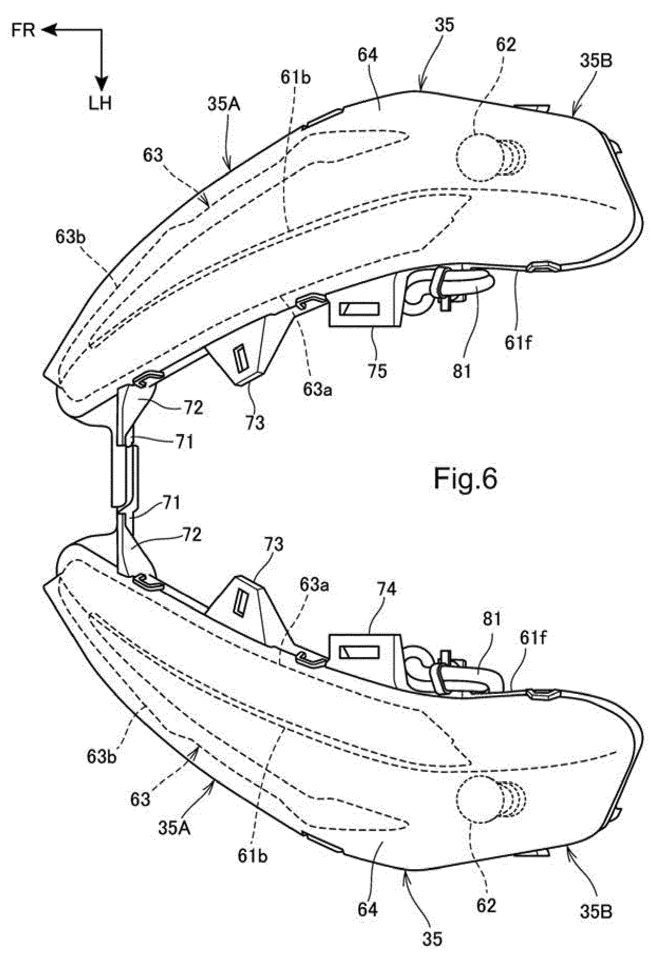

In FIG. 3, rear parts of the left and right turn signal devices 35, 35 (specifically, later mentioned reduced width portions 35B (see FIG. 6)) are substantially parallel to the horizontal vehicle centerline 51 or curve inward in the vehicle width direction, and the rear parts have turn signal bulbs (turn signal bulbs 62 (see FIG. 6) arranged therein. Note that reference numeral 56 indicates a meter, and reference numeral 57 indicates a meter visor arranged in front of the meter 56.

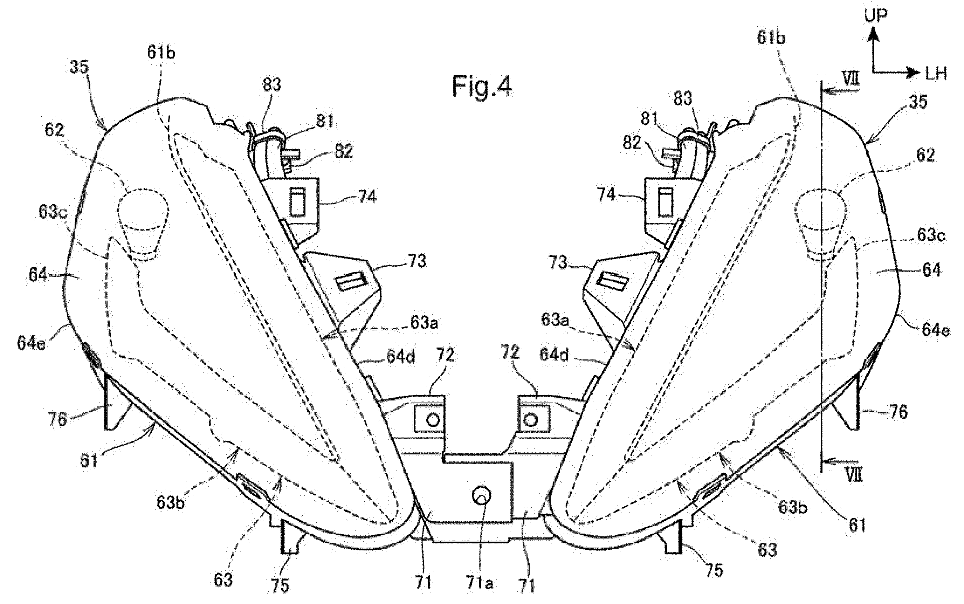

FIG. 4 is a front view of the left and right turn signal devices 35, 35.

The turn signal device 35 includes a base member 61 supported to the body cover 11 (see FIG. 1) on the vehicle body side, a turn signal bulb (bulb) 62 attached to an upper part of the base member 61, a position lamp 63 provided on a front face of the base member 61 and formed into a substantial V shape in front view, and an outer lens 64 attached to an edge part of the base member 61 to cover the turn signal bulb 62 and position lamp 63 from the front.

The base member 61 has, as one body, multiple cover side-attachment portions 71 to 76 for attaching to the body cover 11. The cover side-attachment portions 71 of the turn signal devices 35, 35 have screw insertion holes 71a, for fastening them together to the body cover 11 side with a screw. Note that reference numeral 81 indicates a conductor for electrifying the turn signal bulb 62, and reference numeral 82 indicates a conductor fixing portion, provided integrally with the base member 61 to fix the conductor 81 to the base member 61 with a cable tie 83.

The position lamp 63 is integrally formed of a first light-emitting portion 63a having a predetermined width and extending substantially linearly along an inner edge 64d of the outer lens 64, and a second light-emitting portion 63b having a predetermined width and mostly extending substantially linearly along an outer edge 64e of the outer lens 64. A curved portion 63c curving toward the first light-emitting portion 63a and the turn signal bulb 62, is formed in an upper end part of the second light-emitting portion 63b.

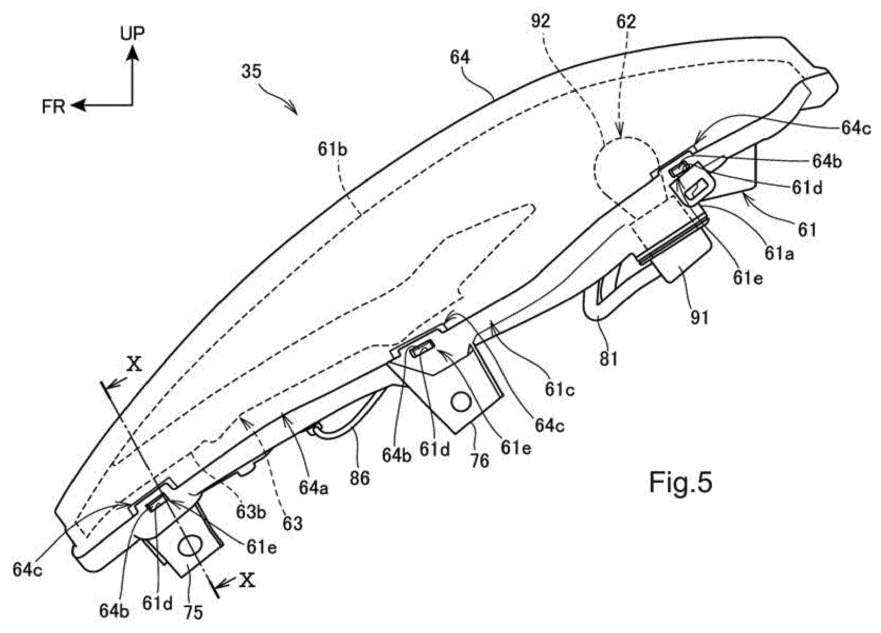

FIG. 5 is a side view of the turn signal device 35.

The turn signal bulb 62 is fixed by being inserted into a bulb insertion opening 61a, which is provided on a bottom face of the base member 61. A filament is arranged inside a glass bulb 92 constituting the turn signal bulb 62. Light emitted from the filament is recognizable through the outer lens 64 within an area from the front of the vehicle to the side of the vehicle (near side of FIG. 6).

Of the light of the position lamp 63, only light of the second light-emitting portion 63b is recognizable from the side of the vehicle. Since the first light-emitting portion 63a (see FIG. 4) of the position lamp 63 is arranged on the inner side in the vehicle width direction of a highest rising edge line 61b of the base member 61, light of the first light-emitting portion 63a is unrecognizable from the side of the vehicle. The edge line 61b is formed into a curved shape protruding upward from lower to upper ends of the base member 61, in side view.

Multiple engaged portions 61e each having a square hole 61d, are provided integrally with a peripheral portion 61c of the base member 61. Meanwhile, multiple engaging portions 64c each having a hook 64b, are provided integrally with a peripheral portion 64a of the outer lens 64, and the outer lens 64 is fixed to the base member 61 by engaging the engaging portions 64c with the engaged portions 61e of the base member 61. Note that reference numeral 86 in FIG. 5 indicates an LED conductor for electrifying LEDs included in the position lamp 63.

FIG. 6 is a plan view of the left and right turn signal devices 35, 35.

The turn signal device 35 is configured of an enlarged width portion 35A whose lateral width gradually increases from a front end part toward the rear, and the reduced width portion 35B whose lateral width gradually decreases from the enlarged width portion 35A toward the rear. The turn signal bulb 62 is arranged in the reduced width portion 35B, or more specifically, in a position closer to the outer side in the vehicle width direction of the reduced width portion 35B, while the position lamp 63 is arranged in the enlarged width portion 35A.

The edge line 61b of the base member 61 extends parallel to an inner edge 61f of the base member 61. The turn signal bulb 62 and the second light-emitting portion 63b of the position lamp 63 are arranged on the outer side in the vehicle width direction of the edge line 61b, whereas the first light-emitting portion 63a of the position lamp 63 is arranged on the inner side in the vehicle width direction of the edge line 61b.

Since the left and right turn signal devices 35, 35 are each configured to be connected through the cover side-attachment portion 71 provided in the base member 61, the left and right symmetrical arrangement can be maintained easily. Accordingly, even when there is variation in the mounting dimension of the other cover side-attachment portions 72 to 76 (see FIG. 4 for cover side-attachment portions 75, 76), the left and right turn signal devices 35, 35 can be arranged favorably on the vehicle body, and appearance can be improved.

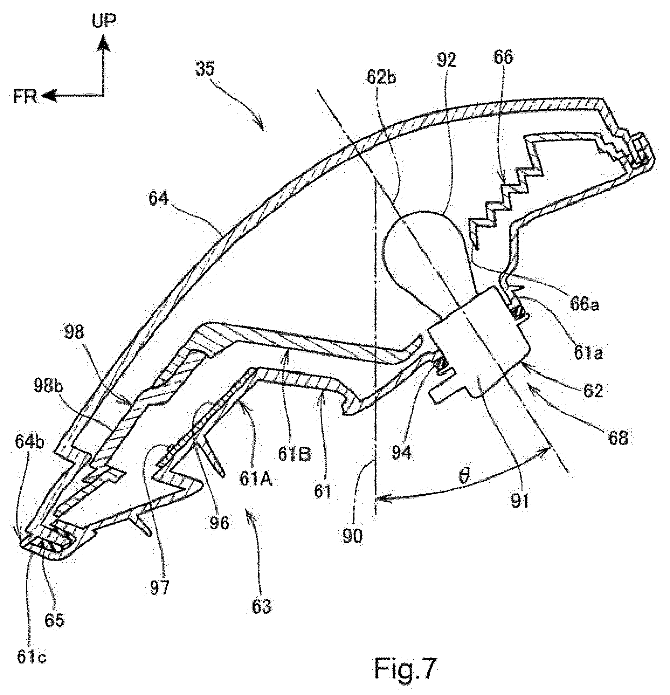

FIG. 7 is a cross-sectional view taken along line VII-VII of FIG. 4.

The base member 61 is configured of a base member main body 61A having the turn signal bulb 62 attached thereto and forming a rear face of the turn signal device 35, and a base member upper portion 61B attached from above so as to overlap the base member main body 61A.

The peripheral portion 64a of the outer lens 64 is attached to the peripheral portion 61c of the base member main body 61A. Note that reference numeral 65 indicates an endless seal rubber, which seals a space between the peripheral portion 61c of the base member main body 61A, and the peripheral portion 64a of the outer lens 64.

A reflector 66 for reflecting light emitted from the turn signal bulb 62 in a predetermined direction, is formed integrally with the base member upper portion 61B, and a bulb insertion hole 66a into which the turn signal bulb 62 is inserted, is formed in the reflector 66.

The turn signal bulb 62 includes: a base 91 engaged with the bulb insertion opening 61a of the base member main body 61A; a filament connected to each of the base 91 and a contact attached to the base 91 through an insulator (not shown); and the glass bulb 92 attached to the base 91 so as to cover the filament. A lamp envelope 62b passing through the center of the turn signal bulb 62 is tilted frontward for a tilt angle θ, with respect to a vertical line 90, and the glass bulb 92 is directed toward the front obliquely upper direction. Note that reference numeral 94 indicates a seal rubber sealing a space between the bulb insertion opening 61a and the base 91.

The above-mentioned base member main body 61A, turn signal bulb 62, reflector 66, and outer lens 64 constitute a turn signal 68.

The position lamp 63 is configured of: the base member main body 61A and base member upper portion 61B; an LED substrate 96 attached to the base member main body 61A and base member upper portion 61B; multiple LEDs 97 as light sources attached to the LED substrate 96, an inner lens 98 attached to the base member upper portion 61B and covering the multiple LEDs 97, and the outer lens 64.

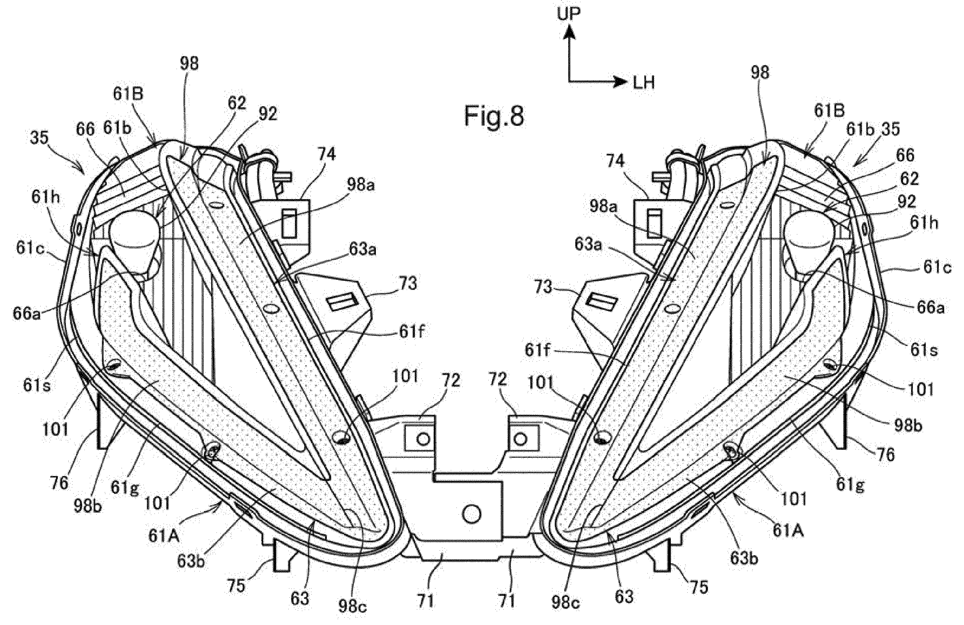

FIG. 8 is a front view of the left and right turn signal devices 35, 35 showing a state where the outer lenses 64 are detached from FIG. 4. Note that multiple dots are provided on the inner lenses 98 for easier understanding of its shape.

The base member upper portion 61B is formed, such that its peripheral portion 61s is parallel to the peripheral portion 61c of the base member main body 61A, and positioned on the inner side of the peripheral portion 61c.

A raised portion 61h raised upward in a substantial V shape is formed in the base member upper portion 61B, along the inner edge 61f (upper edge) constituting the inner side in the vehicle width direction of the peripheral portion 61s of the base member upper portion 61B, and along an outer edge 61g (lower edge) constituting the outer side in the vehicle width direction of the peripheral portion 61s. The inner edge 61f mentioned above is also the upper edge of the base member upper portion 61B, while the outer edge 61g is also the lower edge of the base member upper portion 61B.

The inner lens 98 formed into a substantial V shape in front view, which constitutes the first light-emitting portion 63a and second light-emitting portion 63b of the position lamp 63, is attached to the raised portion 61h with multiple screws 101. The inner lens 98 is integrally formed of a first inner lens portion 98a extending along the inner edge 61f of the base member upper portion 61B, and a second inner lens portion 98b extending along the outer edge 61g of the peripheral portion 61s. The first inner lens portion 98a is inclined downward toward the front, while the second inner lens portion 98b is inclined downward toward the front and toward the outer side.

An edge line 98c, which is continuous with the edge line 61b formed in the base member upper portion 61B, is formed in the inner lens 98. The edge line 98c is the border between the first inner lens portion 98a and the second inner lens portion 98b.

The turn signal bulb 62 protrudes from the bulb insertion hole 66a in the reflector 66, and the reflector 66 around the glass bulb 92 of the turn signal bulb 62 distributes light of the turn signal bulb 62, within an area from the front of the vehicle to the side of the vehicle.

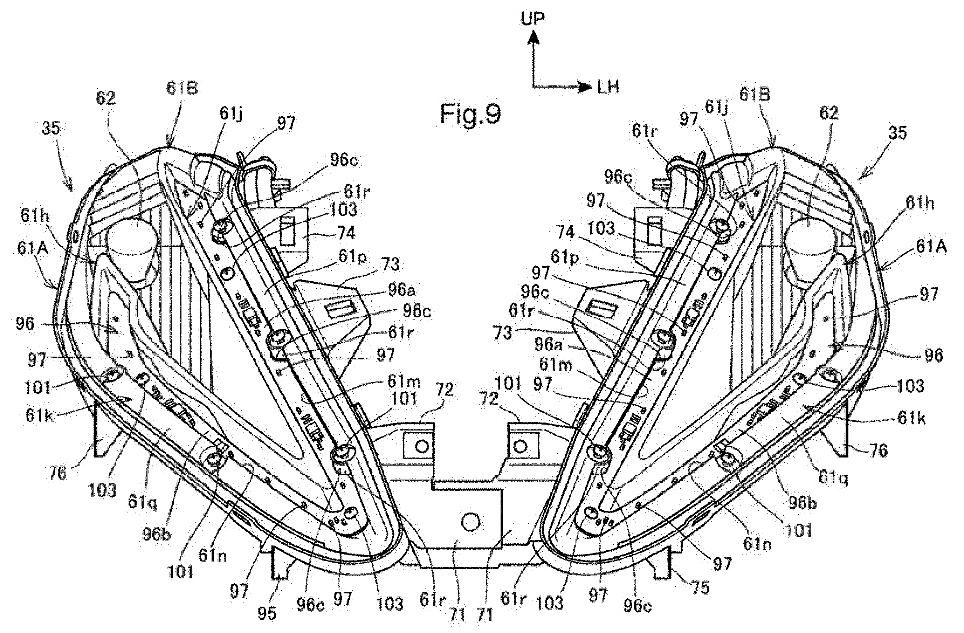

FIG. 9 is a front view of the left and right turn signal devices 35, 35 showing a state where the inner lenses 98 are detached from FIG. 8.

A substantially V-shaped groove 61j, and an inner lens attachment portion 61k provided on the edge of the groove 61j to attach the inner lens 98, are formed in the raised portion 61h of the base member upper portion 61B. The groove 61j is configured of a first groove 61m constituting a part on the inner side in the vehicle width direction of the V shape from the lower end of the V shape, and a second groove portion 61n constituting a part on the outer side in the vehicle width direction of the V shape from the lower end of the V shape. The lower ends of the first groove 61m and second groove 61n are connected with each other.

The inner lens attachment portion 61k is configured of a first inner lens attachment portion 61p provided on the inner edge of the first groove 61m, and a second inner lens attachment portion 61q provided on the outer edge of the second groove 61n.

The LED substrate 96, which includes the multiple LEDs 97 and is formed into a substantial V shape in front view along the groove 61j, is attached to a bottom part of the groove 61j with multiple screws 103. While most of the screws 103 are screwed into the base member upper portion 61B that forms the bottom part of the groove 61j, some of the screws 103 are screwed into the base member main body 61A, through an opening part formed in the bottom part of the groove 61j.

The LED substrate 96 is integrally configured of a first substrate portion 96a arranged inside the first groove 61m, and a second substrate portion 96b arranged inside the second groove 61n.

Multiple boss portions 61r having screw insertion holes for inserting the screws 101, are provided in the first inner lens attachment portion 61p. The boss portions 61r protrude further to the inner side than a side wall of the first groove 61m, so that multiple cutout portions 96c for avoiding and fitting with the boss portions 61r are formed, in the first substrate portion 96a. The screw 101 is inserted into the boss portion 61r, and then screwed into the base member main body 61A. That is, the base member upper portion 61B and the inner lens 98 (see FIG. 8) are fastened together to the base member main body 61A, by all of the screws 101 inserted into the boss portions 61r and inserted into parts other than the boss portion 61r.

Providing the boss portions 61r on the groove 61j side and the cutout portions 96c on the LED substrate 96 side as mentioned above allows the LED substrate 96 to be arranged more inward in the vehicle width direction, and can also determine the position of the LED substrate 96 with respect to the groove 61j. With this, not only can the light-emitting area of the LEDs 97 be widened, but also the LED substrate 96 can be positioned more accurately with respect to the groove 61j, so that the LED substrate 96 can be easily assembled onto the groove 61j.

In the aforementioned FIGS. 4, 8, and 9, in the position lamp 63, the first groove 61m, first substrate portion 96a, multiple LEDs 97 attached to the first substrate portion 96a, and first inner lens portion 98a constitute the first light-emitting portion 63a, whereas the second groove 61n, second substrate portion 96b, multiple LEDs 97 attached to the second substrate portion 96b, and second inner lens portion 98b constitute the second light-emitting portion 63b.

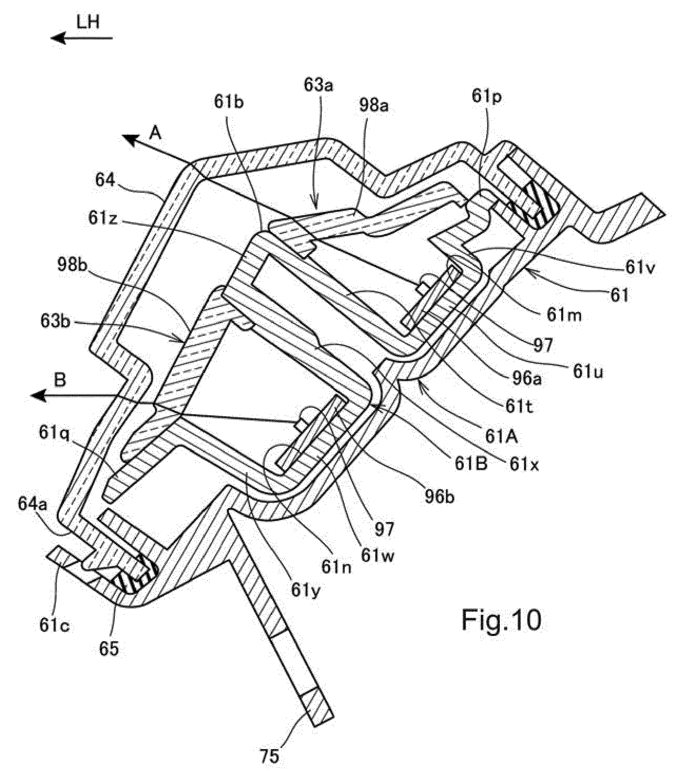

FIG. 10 is a cross-sectional view taken along X-X of FIG. 5.

The first groove 61m and second groove 61n are formed in the base member upper portion 61B. The first groove 61m is formed of a bottom wall 61u, and side walls 61t, 61v extending from the bottom wall 61u so as to face each other. The second groove 61n is formed of a bottom wall 61w, and side walls 61x, 61y extending from the bottom wall 61w so as to face each other. An upper wall 61z connects the upper ends of the side walls 61t, 61x.

The first substrate portion 96a, second substrate portion 96b are arranged on the respective bottom parts (bottom wall 61u, bottom wall 61w) of the first groove 61m and second groove 61n formed in the base member upper portion 61B, while the first inner lens portion 98a, second inner lens portion 98b are arranged on the respective opening parts of the first groove 61m and second groove 61n.

The first inner lens portion 98a is arranged on the inner side in the vehicle width direction of the edge line 61b of the base member upper portion 61B. Hence, the sideward light emitted from the LEDs 97 provided in the first substrate portion 96a proceeds obliquely sideward toward the front of the vehicle, while being refracted by the first inner lens portion 98a and the outer lens 64 as indicated by arrow A, but does not reach the side of the vehicle since it is shielded by the side wall 61t forming the edge line 61b. Meanwhile, the sideward light emitted from the LEDs 97 provided in the second substrate portion 96b proceeds within an area from the obliquely sideward direction toward the front of the vehicle, to the side of the vehicle, while being refracted by the second inner lens portion 98b and the outer lens 64 as indicated by arrow B.

As shown in the aforementioned FIGS. 4 and 7, the turn signal device 35 for the motorcycle 10 (see FIG. 1) as a vehicle lighting device includes: the turn signal bulb 62 as a turn signal lamp-light source provided in the turn signal 68 as a turn signal lamp; the LEDs 97 as a position lamp-light source provided in the position lamp 63; the base member 61 to which the turn signal bulb 62 and LEDs 97 are attached; and the outer lens 64 covering the turn signal bulb 62 and LEDs 97, and is characterized in that: the turn signal device 35 is provided in a left and right pair, and is attached such that the outer lens 64 extends obliquely upward to the outer side from the vehicle center side in front view; and in front view, the turn signal bulb 62 is attached to an outer position in the vehicle width direction of the base member 61, while the light-emitting part of the position lamp 63 includes the first light-emitting portion 63a extending along the upper edge (inner edge in vehicle width direction) of the outer lens 64 from the vehicle center side, and the second light-emitting portion 63b extending along the lower edge (outer edge in vehicle width direction) of the outer lens 64 from the vehicle center side.

According to this configuration, since the turn signal bulb 62 is attached to an outer position in the vehicle width direction of the base member 61, the turn signal 68 can be made more recognizable not only from the front of the vehicle, but also from the side of the vehicle. In addition, the light-emitting part of the position lamp 63 can be widened by the first light-emitting portion 63a and the second light-emitting portion 63b, and therefore the position lamp can be made more recognizable.

Also, as shown in FIGS. 4, 9, and 10, the base member 61 includes the edge line 61b (more specifically, side wall 61t constituting edge line 61b) as a top portion formed along the first light-emitting portion 63a, so as to cover the first light-emitting portion 63a from the outer side in the vehicle width direction. Hence, in side view, light from the first light-emitting portion 63a of the position lamp 63 is shielded, so that light emitted from the turn signal 68 can be made more recognizable.

Also, the curved portion 63c as an outer end portion of the second light-emitting portion 63b in the vehicle width direction is curved toward the first light-emitting portion 63a side. Hence, the curved portion 63c makes it easier to check the attachment direction of the second light-emitting portion 63b, whereby assembly work is made easier, and misassembly of the left and right turn signal devices 35 can be prevented.

Also, the turn signal lamp-light source is the turn signal bulb 62, while the position lamp-light source is the LEDs 97. Hence, the turn signal bulb 62 requiring maintenance is arranged in an outer position in the vehicle width direction of the base member 61, so that maintainability can be improved.

Also, as shown in FIGS. 4, 8, and 10, the first light-emitting portion 63a is provided to tilt downward toward the front and radiate light at least to the front, while the second light-emitting portion 63b is provided to tilt downward toward the front and also to tilt downward toward the outer side, and can radiate light at least within an area from the front to the side of the vehicle. Accordingly, the area irradiated with light can be widened, and the lamp can be made even more recognizable.

The embodiment described above only shows an aspect of the present invention, and any modification or application can be made without departing from the gist of the invention.

For example, in the embodiment, the vehicle lighting device is not limited to a lighting device for a motorcycle, and may be a lighting device for a straddle type vehicle, a motor tricycle, or the like.

Moreover, the types of the turn signal lamp-light source and the position lamp-light source are not particularly limited, and may be a bulb, an LED, or other types of light sources.

### Description of Reference Numerals

- 10: motorcycle (vehicle)
- 35: turn signal device (lighting device)
- 61: base member
- 61b: edge line (top portion)
- 62: turn signal bulb (turn signal lamp-light source)
- 63: position lamp
- 63a: first light-emitting portion
- 63b: second light-emitting portion
- 63c: curved portion
- 64: outer lens (lens)
- 68: turn signal (turn signal lamp)
- 97: LED

## Claims

1. A vehicle lighting device comprising:
a turn signal lamp-light source (62) provided in a turn signal lamp (68);
a position lamp-light source (97) provided in a position lamp (63);
a base member (61) to which said turn signal lamp-light source (62) and said position lamp-light source (97) are attached; and
a lens (64) covering said turn signal lamp-light source (62) and said position lamp-light source (97), wherein:
said vehicle lighting device is provided in a left and right pair, and is attached such that said lens (64) extends obliquely upward to the outer side from the vehicle center side in front view; and
in front view, said turn signal lamp-light source (62) is attached to an outer position in the vehicle width direction of said base member (61), while a light-emitting part of said position lamp (63) includes a first light-emitting portion (63a) extending along the upper edge of said lens (64) from the vehicle center side, and a second light-emitting portion (63b) extending along the lower edge of said lens (64) from the vehicle center side.

2. The vehicle lighting device according to claim 1, wherein:
said base member (61) includes a top portion (61b) formed along said first light-emitting portion (63a), so as to cover said first light-emitting portion (63a) from the outer side in the vehicle width direction.

3. The vehicle lighting device according to any one of claims 1 and 2, wherein:
an outer end portion in the vehicle width direction (63c) of said second light-emitting portion (63b) is curved toward said first light-emitting portion (63a) side.

4. The vehicle lighting device according to any one of claims 1 to 3, wherein:
said turn signal lamp-light source (62) is a bulb; and
said position lamp-light source (97) is an LED.
